Europäisches Patentamt

(19) European Patent Office

Office européen des brevets

(11) Publication number: **0 452 017 A1**

# (12) EUROPEAN PATENT APPLICATION

(21) Application number: 91302853.6

(51) Int. Cl.⁵: **E04F 11/18, F16B 2/02**

(22) Date of filing: 02.04.91

(30) Priority: 07.04.90 GB 9007958
13.02.91 GB 9103059

(43) Date of publication of application:
16.10.91 Bulletin 91/42

(84) Designated Contracting States:
AT BE CH DE DK ES FR GB GR IT LI LU NL SE

(71) Applicant: LOCKTRACK LIMITED
c/o Grant Thornton, Higham House, Higham
Place
Newcastle upon Tyne NE1 8EE (GB)

(72) Inventor: Wilson, Brian Thomas
6 The Chesters
Newcastle upon Tyne, NE5 1EF (GB)
Inventor: Devitt, Nicholas Jeremy James
69 Starbeck Avenue
Sandyford, Newcastle upon Tyne, NE2 1PB
(GB)

(74) Representative: Sanderson, Michael John et
al
MEWBURN ELLIS 2 Cursitor Street
London EC4A 1BQ (GB)

(54) Stair aid.

(57) An aid primarily for assisting persons of limited ability to climb stairs comprises an elongate channel member (10,31) defining therein a channel (11) of generally uniform transverse section, a gripper member (17) including a handle (18,30) and, rigidly connected to the handle (18,30), a locking member (22,23,39) located within the channel (11). The handle (18) and locking member (22,23,39) are pivotal together about an axis extending transversely of the length of the channel member (10,31) on the application to the handle (18) of a force directed substantially parallel to the length of the channel (11), the pivoting movement being between a first position in which the locking member (22,23,39) is free to slide along the channel (11), and a second position in which the locking member (22,23,39) applies frictional force to an inner surface (12,13,44) of the channel member (10,31) and thereby prevents movement of the locking member (22,23,39) along the channel (11).

EP 0 452 017 A1

FIG.5.

FIG.6.

The present invention relates to an aid primarily for assisting persons of limited mobility in climbing stairs, although the aid may also be used on ramps, inclined walkways and in other situations.

People whose mobility is restricted by disability or age often find particular difficulty in climbing stairs, and indeed a large proportion of domestic accidents occur on staircases. While assistance is usually afforded by a suitable handrail, a person whose mobility is restricted often finds difficulty or discomfort in trying to take a secure grip on a handrail. The normal action of climbing a staircase using a handrail entails gripping the rail while flexing the wrist through a succession of different positions and that flexing may be impossible or painful to a person with, say, arthritis.

Numerous attempts have been made over a period of many years to provide a device which will assist people in climbing stairs. Such devices are described in, for example, patent specifications nos. GB 960844, GB 1487558, GB 1508069, GB 2188344, GB 2225600 and US 4253287, all of which comprise one or two continuous rails provided with steps or ratchet slots in which a handle or cross-bar held by the user engages in succession as he progresses along the length of the rail. Quite apart from the difficulty inherent in manufacturing some at least of these devices on any significant scale, and also the difficulty of manipulating some of them for a user of limited mobility, they all entail a step-wise action governed by the spacing of the stepped sockets or the like against which the cross-bar or handle engages.

Specification no. GB 2106790 describes a device in which a handled carriage slides along a rail and can be clamped at any position along the rail by means of friction pads carried upon piston elements. However the structure and operation of the carriage is relatively complicated and it is believed that the device would be relatively expensive to manufacture and relatively difficult to manipulate in use.

A more recent proposal described in patent specification no. GB 2212832 comprises a handle which is slidable along a rail but which becomes jammed with respect to the rail by any force applied to the handle in any direction other than parallel to the length of the rail. That is, if the handle is pushed or pulled in the direction of the length of the rail, it will slide along the rail, but, if it is pressed or lifted across the length of the rail, then it will jam. While there is clear merit in a device which provides for jamming of the handle at any position along the rail rather than at stepped locations, it appears to be undesirable that a force applied along the rail, such as might be applied by a person pulling themselves up a staircase, leads to sliding of the handle along the rail.

Against this background of numerous assorted prior attempts to provide an aid to assist people in climbing stairs, it would be desirable to be able to provide an improved aid for this purpose.

According to the present invention there is provided a stair aid comprising a channel member defining therein a continuous channel of generally uniform cross-section, and a gripper member including a handle and, rigidly connected to said handle, a locking member located within said channel, the handle and the locking member together being pivotal about an axis extending transversely of the length of the channel member on the application of a force on the handle in a direction substantially parallel to the length of the channel between a first position in which the locking member is free to slide along the channel, and a second position in which the locking member applies frictional force to an inner surface of the channel member and thereby prevents movement of the locking member along the channel.

In order to use the aid of the invention to assist in climbing stairs or an incline, the user engages the gripper member in the channel member which is mounted at the side of the stairs or incline, for example along the top of a conventional handrail, and slides the gripper member along the channel, alternately pivoting the handle and locking member into their locking position while he is climbing and then disengaging them and advancing the gripper member along the channel while he is stationary.

Conveniently, the channel member of the device is formed as an extruded profile, for example in aluminium, or it may be fabricated, preferably in metal, either before installation or in situ in its intended position of use. The cross-sectional shape of the channel member may have various forms but it is preferred that this shape is symmetrical about the longitudinal central axis of the channel.

In order that the handle of the gripper member can be readily grasped throughout use of the aid by a ,person whose grip may be restricted, it is desirable that the handle be robust in form. In order that the device can be used for both ascending and descending a staircase or other incline, the handle is preferably of generally symmetrical shape in side elevation. In particular, the handle is preferably of a symmetrical curved shape, for example in the form of a ring or "D", in side elevation.

The locking member and its method of locking may take various forms, but in each form the locking member is rigidly connected to the handle and is located within the channel.

Thus the locking member may be mounted upon an extension from the handle, or may be rigidly fixed upon a common pivot for the handle and the locking member.

In one form of the invention, the handle includes an extension received within, for movement along, the channel, the locking member comprising at least one lateral projection from the extension, which projection can engage an inner surface of the channel member in such a manner that the channel member is gripped between the handle and the projection.

The extension comprises a flat plate the cross-section of which is significantly narrower than that of the handle, but only slightly narrower than that of the channel in which it moves. For example, in one form of the invention, the extension is generally disc-shaped.

Preferably there are two such lateral projections, able simultaneously to engage, two inner surfaces of the channel member on opposite sides of the channel.

The or each projection conveniently takes the form of a short pin, preferably of generally rounded cross-section, for example of circular or elliptical cross-section.

In this form of the invention, the channel member may be provided with an outwardly and upwardly-directed surface of enhanced frictional characteristics at or adjacent the side or sides of the channel, whereby an improved grip is afforded between the gripper and the channel member when they are in a relative gripping position.

Such a frictional surface may be provided by modifying the outer surface of the channel member itself, for example by the provision of ribs thereon, or preferably by providing a rubber or similar material along the sides of the channel.

The gripper member may advantageously be provided with a corresponding frictional surface.

Use of the device may be assisted by the provision of a further guide, mounted upon the gripper member in a position which, in use, lies outside the channel member. Thus the extension from the gripper member which guides movement of that member along the channel may carry both one or more projections lying within the channel and also one or more guides lying outside the channel.

In a preferred form of the invention the channel member is laterally open, the locking member and the handle being mounted on a common pivot having an axis extending transversely of the channel member through the lateral opening therein, pivoting of the handle from the first position to the second position urging the locking member into frictional engagement with an inner surface of the channel member.

It is further preferred that a locking shoe is located between the locking member and the inner surface of the channel member, pivoting of the handle from the first position to the second position causing the locking member to urge the locking shoe into frictional engagement with said inner surface of the channel member.

By way of examples only, embodiments of the invention will now be described in greater detail with reference to the accompanying drawings of which:

Fig. 1 is an elevation from the side of the gripper member of a first embodiment of a stair aid according to the invention;

Fig. 2 is an elevation from below of the gripper member of Fig. 1;

Fig. 3 is a cross-sectional view, to a somewhat larger scale, of the channel member of the first embodiment;

Fig. 4 is a cross-sectional view of a rubber extrusion within which the channel member of Fig. 3 is located in use, to the same scale as that of Fig. 3;

Fig. 5 illustrates the manner of co-operation between the gripper member and the channel member of Figs. 1 to 4 when the user is moving the gripper member while ascending a staircase;

Fig. 6 is a view corresponding to Fig. 5, with the gripper member and channel member in the gripping position;

Fig. 7 shows the gripper member and channel member, during relative movement, in the downward mode of use;

Fig. 8 is a view corresponding to Fig. 7, with the gripper member and channel member in the gripping position;

Fig. 9 is an exploded view showing the components of a second embodiment of a stair aid according to the invention;

Fig. 10 is a perspective view showing the stair aid of Fig. 9 assembled, and

Fig. 11 is an elevation from one end of the stair aid of Figs. 9 and 10.

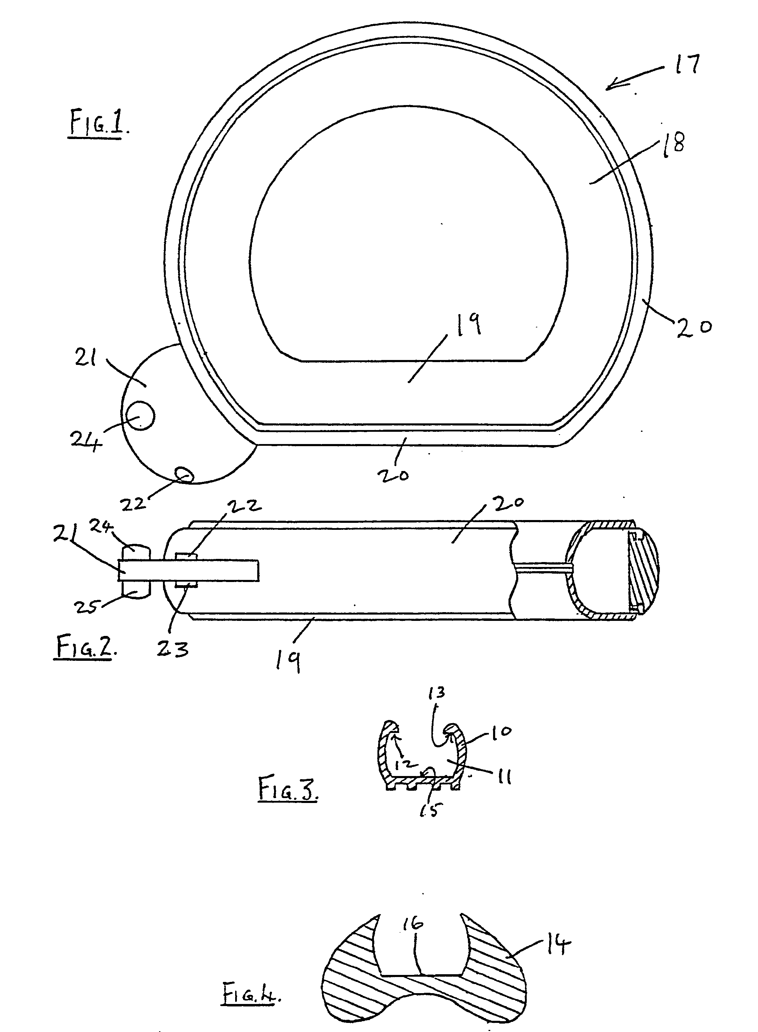

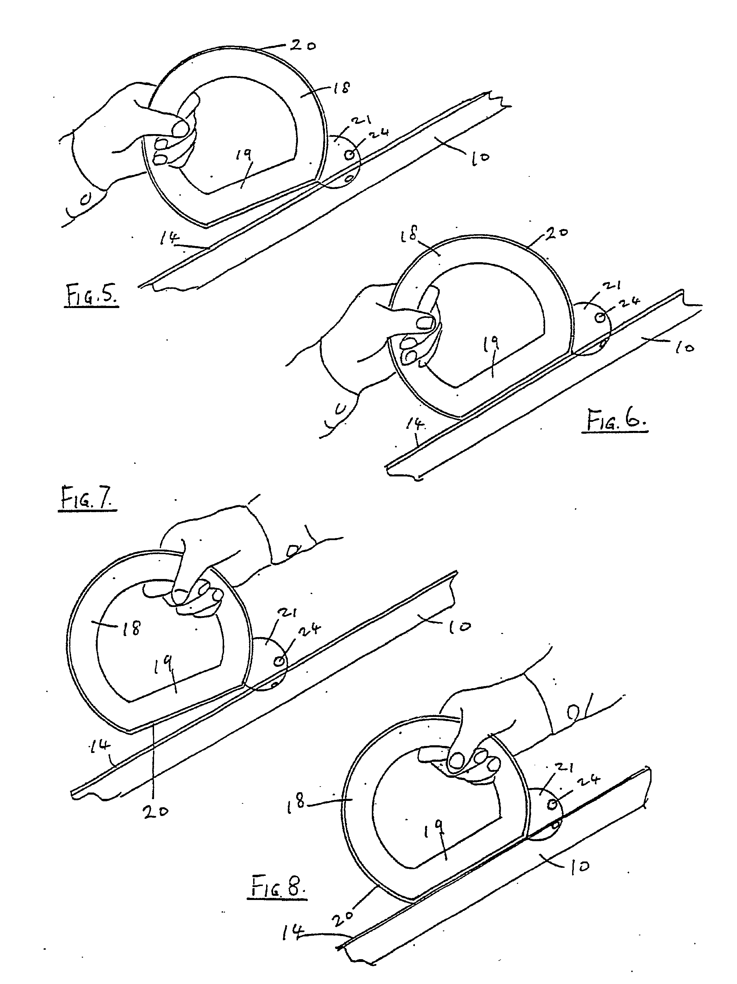

Referring to Figs. 1 to 4, the first illustrated embodiment comprises a gripper member shown in Figs. 1 and 2 and a channel member and extrusion shown in Figs. 3 and 4 respectively. The channel member 10 is an extruded aluminium profile of generally U-shape in transverse section, which defines therein an elongated channel 11 including two aligned, inwardly and downwardly-facing surfaces 12,13. The member 10 is a close fit within an extruded rubber profile 14. The channel member 10 is secured within the profile 14 and along the upper edge of a banister or handrail (not shown) adjacent to a staircase or ramp by means of screws passed through respective flat surfaces 15,16 of the member 10 and profile 14.

The gripper member 17 of Figs. 1 and 2 is generally D-shaped in side elevation, having an arcuate handle section 18 and a flat section 19. A rubber friction strip 20 encircles the outer periphery of the gripper member. Projecting from the handle section 18 at a point adjacent to the end of the flat section 19 is a disc-shaped extension 21, which is of such thickness as to be an easy sliding fit within the channel member 10. Short projections 22, 23 project laterally from the side faces of the disc 21, which projections are elliptical in cross-section and function, as described below, as locking cams to assist in locking the gripper member 17 to the channel member 10. Running guides 24,25 of circular cross-section also project laterally from the side faces of the disc 21.

Figs. 5 to 8 illustrate the way in which the channel member 10 and the gripper member 17 co-operate to assist a user climbing or descending a staircase.

The gripper member 17 is placed with the disc-shaped extension 21 within the channel 11 to such an extent that the locking cams 22, 23 lie within the channel and the guides 24, 25 are outside the channel. With the handle 18 in the inclined position shown in Figs. 5 and 7, the locking cams are spaced from the inwardly and downwardly-facing surfaces 12,13 of the channel member 10, while the section 19 of the handle, and the friction strip 20 thereon, are also spaced from the outer surface of the channel member 10 and the profile 14. Thus, with the handle 18 inclined in this way, the user is able to slide the gripper member 17 along the channel member 10.

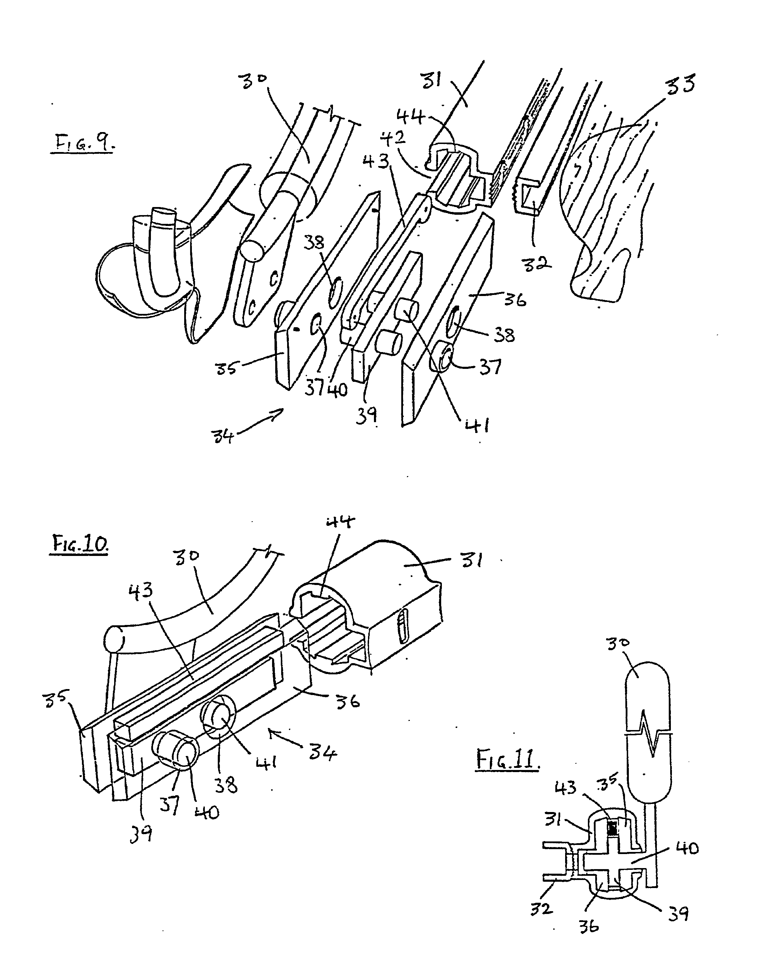

However, when the handle 18 is pivoted into the position shown in Figs. 6 and 8, the locking cams 22, 23 move into engagement with the respective inwardly and downwardly-facing surfaces 12, 13 of the channel member 10, and the friction strip 20 along the section 19 of the handle 18 engages the outer surface of the channel member 10 and of the profile 14. In this way, the channel member 10 becomes gripped between the handle 18 and the cams 22, 23.

Thus, by sliding and locking the gripper member 17 in alternate sequence, and himself moving only when the member 17 is locked in position, a user is able to ascend or descend a staircase safely with the support afforded by the device.

The second embodiment of the device according to the invention, which is illustrated in Figs. 9 and 11 of the accompanying drawings, comprises a gripper assembly which includes a generally ring-shaped handle 30, shown only in part in the drawings, and an extruded channel member 31. The channel member 31 is mounted, via an intermediate supporting rail 32, upon a banister 33.

A support carriage 34 for the handle 30 is located within the channel member 31 and comprises a pair of opposed elongate plates 35,36 each provided with a pair, of longitudinally spaced apertures 37, 38 therethrough.

Located between the plates 35,36 is a locking shoe 39, extending through which are a transverse pivot pin 40 and, longitudinally spaced from said pivot pin 40, a transverse abutment pin 41.

The channel member 31 includes a continuous slot 42 in one side thereof, and one end of the pivot pin 40 extends through the plate 35 and through the slot 42, the handle 30 being secured to said end on the pivot pin 40 whereby the handle 30 and the locking shoe 39 together with the pivot pin 40 and the abutment pin 41 comprise an integral unit with the abutment pin 41 being received within the apertures 38 in the plates 35,36.

Thus, when a pull is applied to the handle 30 in a direction parallel to the length of the channel member 31, the handle 30 and the locking shoe 39 pivot together about the axis of pivot pin 40 as centre. The angular extent of the pivoting movement is limited by the co-operation between the abutment pin 41 and the apertures 38, the latter being of greater diameter than the former as best seen in Fig. 10.

A pressure pad 43 of a high friction material is retained between the plates 35 and 36 above, and spaced from, the locking shoe 39. When the handle 30 is rotated in an anti-clockwise direction as viewed in the drawings, the locking shoe 39 is rotated into contact with the pressure pad 43 which is forced into frictional contact with an inner upper surface 44 of the channel member 31, thereby immobilising the gripper assembly. In this position, the device will afford a fixed grip for a person pulling himself up an adjacent staircase.

While the most important application of the device according to the present invention, in particular in the form of the embodiments illustrated in the drawings and described herein, is to assist a person in climbing stairs or an incline, for which purpose the channel member will be mounted in an inclined position, the device may also be used for other purposes, with the channel member in other orientations. For example, the channel member may be mounted in a horizontal position in order to assist progress along a level surface. Thus the channel member may be supported along the edges of a room or in an outdoor location, to assist a person in moving between two places on the same level. With the channel member mounted in a vertical orientation, the device according to the invention may serve to enable a person to raise himself from an adjacent seat, bed or bath.

## Claims

1. A stair aid comprising an elongate channel member (10,31) defining therein a continuous channel (11) of generally uniform transverse section, and a gripper member (17) including a handle (18,30) and, rigidly connected to said handle (18,30), a locking member (22,23,39) located within said channel (11), characterised in that the handle (18,30) and the locking member (22,23,39) are together pivotal about an axis extending transversely of the length of the channel member (10,31) on the application of a force on the handle (18,30) in a direction substantially parallel to the length of the channel (11) between a first position in which the locking member (22,23,39) is free to slide along the channel (11), and a second position in which the locking member (22,23,39) applies frictional force to an inner surface (12,13,44) of the channel member (10,31) and thereby prevents movement of the locking member (22,23,39) along the channel (11).

2. A stair aid as claimed in claim 1 in which the channel member (10,21) comprises an extruded profile.

3. A stair aid as claimed in claim 1 or claim 2 in which the handle (18,30) is of a symmetrical curved shape in side elevation.

4. A stair aid as claimed in any one of claims 1 to 3 in which the handle (18) includes an extension (21) received within, for movement along, the channel (11), the locking member comprising at least one lateral projection (22, 23) from the extension (21), which at least one projection (22,23) can engage an inner surface (12,13) of the channel member (10) in such a manner that the channel member (10) is gripged between the handle (18) and the or each projection (22,23).

5. A stair aid as claimed in claim 4 in which the extension comprises a flat plate (21) the cross-section of which is significantly narrower than that of the handle (18) but only slightly narrower than that of the channel (11) in which it moves.

6. A stair aid as claimed in claim 4 or claim 5 in which there are two lateral projections (22,23) able simultaneously to engage two inner surfaces (12,13) of the channel member (10) on opposite sides of the channel (11).

7. A stair aid as claimed in any one of claims 4 to 6 in which adjacent surfaces of the channel member (10) and the gripper (17) are provided with enhanced frictional characteristics whereby an improved grip is afforded between the gripper (17) and the channel member (10) when they are in a relatively gripping position.

8. A stair aid as claimed in claim 1 in which the channel member (31) is laterally open, the locking member (37) and the handle (30) being mounted on a common pivot (40) having an axis extending transversely of the channel member (31) through the lateral opening (42) therein, pivoting of the handle (30) from the first position to the second position urging the locking member (37) into frictional engagement with an inner surface (44) of the channel member (31).

9. A stair aid as claimed in claim 8 and including a locking shoe (43) located between the locking member (37) and the inner surface (44) of the channel member (31), pivoting of the handle (30) from the first position to the second position causing the locking member (37) to urge the locking shoe (43) into frictional engagement with said inner surface (44) of the channel member (31).

FIG.1.

17

18

19

20

21

24

22

20

FIG.2.

21 24

22

20

25

23

19

FIG.3.

13

10

12

11

15

FIG.4.

16

14

7

Fig.5.

Fig.6.

Fig.7.

Fig.8.

Fig. 9.

Fig. 10.

Fig. 11.

European Patent
Office

**EUROPEAN SEARCH REPORT**

Application Number

EP    91 30 2853

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 274 614 (WARRALLO)<br>* column 1, line 55 - column 3, line 16; figures 1-7 * | 1,2,4-7 | E04F11/18<br>F16B2/02 |
| D,Y<br>D,A | GB-A-2 212 832 (KITSON)<br>* page 1, line 36 - page 2, line 1 *<br>* page 2, line 21 - page 4, line 10; figures 1-5 * | 1,2,4-7<br>3,8,9 | |

TECHNICAL FIELDS
SEARCHED (Int. Cl.5 )

E04F
F16B
A47B

The present search report has been drawn up for all claims

| Place of search | Date of completion of the search | Examiner |
|---|---|---|
| THE HAGUE | 10 JULY 1991 | AYITER J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
&: member of the same patent family, corresponding
   document

EPO FORM 1503 03.82 (P0401)